# EUROPÄISCHE PATENTSCHRIFT

(11) **EP 0 619 159 B1**
(45) Veröffentlichungstag und Bekanntmachung des Hinweises auf die Patenterteilung: **12.06.1996**
(21) Anmeldenummer: 93105556.0
(22) Anmeldetag: 03.04.1993
(51) Int. Cl.: B23B 5/28

(54) **Verfahren zur Reprofilierung der jeweils aus Lauf- und Spurkranzfläche zusammengesetzten Radprofilflächen an Rädern von Eisenbahnradsätzen**
Method for reprofiling railway wheels
Méthode de reprofilage de roues de chemin de fer

(43) Veröffentlichungstag der Anmeldung: 12.10.1994
(73) Patentinhaber: HEGENSCHEIDT-MFD GmbH, D-41812 Erkelenz (DE)
(72) Erfinder: Heimann, Alfred, Dr.-Ing., W-5100 Aachen (DE)
(74) Vertreter: Mayer-Pohske, Joachim-Wolfgang

(56) Entgegenhaltungen:
- EP-A- 0 181 456
- EP-A- 0 252 164
- DE-A- 3 931 747
- DE-B- 2 608 940

## Beschreibung

Die Erfindung betrifft ein Verfahren und eine Vorrichtung zur Reprofilierung der jeweils aus Lauf- und Spurkranzfläche zusammengesetzten Radprofilflächen von um eine Mittenachse rotierend angetriebenen Eisenbahnradsätzen durch Abdrehen, wobei eine Meßfläche an den Radprofilflächen durch Drehen hergestellt wird, worauf nach Messung der Durchmesser der Meßfläche die Drehwerkzeuge in Abhängigkeit von diesem Meßergebnis und den senkrecht zur Mittenachse vorhandenen Verschleißtiefen in Richtung zur Mittenachse so verstellt werden, daß sie nach Beendigung der Reprofilierung am reprofilierten Radsatz Neuprofile gleichen Durchmessers erzeugt haben.

Dieses Verfahren ist aus der DE-PS 26 08 940 bekannt und eine Vorrichtung gemäß dem Oberbegriff des Anspruchs 9 ist aus der DE-A-3 931 747 bekannt.

Die Ermittlung von Verschleißtiefen ist bekannt z.B. aus der DE-AS 15 52 335, in der eine automatische Tasteinrichtung für die Zustellung des Drehwerkzeuges an Radsatzdrehmaschinen offenbart ist. Diese Tasteinrichtung erlaubt es, die Verschleißtiefe automatisch festzustellen und die Supporte aufgrund der stärksten Verschleißstelle automatisch so zuzustellen, daß die Drehwerkzeuge auch noch die größte Verschleißtiefe erfassen.

Bei einer Verfahrensweise nach der DE-AS 15 52 335 ergeben sich nach der Reprofilierung wegen der unterschiedlichen Verschleißzustände der Räder regelmäßig unterschiedliche Raddurchmesser. Dieser Nachteil wird mit dem Verfahren nach der DE-PS 26 08 940 dadurch beseitigt, daß vor dem Reprofilieren an jeder Radprofilfläche eine Meßfläche angedreht wird, deren Durchmesser dann gemessen und die Drehwerkzeuge ausgehend von diesem Meßergebnis und den senkrecht zur Radachse vorhandenen Verschleißtiefen, radial so verstellt werden, daß sie nach Beendigung der Reprofilierung am Radsatz Räder gleichen Durchmessers erzeugt haben. Wird dieses Verfahren jedoch auf Radsatzdrehmaschinen mit Reibrollenantrieb angewendet, werden wegen der an der reprofilierten Umfangsfläche der Räder angreifenden Reibrollen bei der weiteren Zerspanung zur Herstellung des Radprofils Drehspäne in die fertig reprofilierten Umfangsflächen eingewalzt und hinterlassen dort unzulässige Markierungen.

Der Erfindung liegt damit die Aufgabe zugrunde, ein Verfahren der eingangs beschriebenen Art so weiter zu entwickeln, daß die unerwünschte Einwalzung von Spänen vermieden werden kann.

Weiter liegt der Erfindung die Aufgabe zugrunde, eine Maschine zur Durchführung dieses Verfahrens vorzuschlagen.

Verfahrensmäßig ist diese Aufgabe, ausgehend von einem Verfahren der eingangs beschriebenen Art, dadurch gelöst, daß der zu reprofilierende Radsatz für den Antrieb an seinen Achslagerkästen aufgenommen und fixiert und von mindestens einer Reibrolle rotierend angetrieben wird, wobei die Reprofilierung der Neuprofile zunächst außerhalb der Kontaktflächen Reibrolle/Rad und nachfolgend im Restbereich des Profiles erfolgt. Hierbei und nachfolgend soll der Begriff "Reibrolle" sowohl solche Rollen bezeichnen, mit denen ein Rad eines Radsatzes angetrieben wird, als auch solche Rollen, auf denen sich das Rad eines Radsatzes abstützt.

Bei der Reprofilierung von ausgebauten Radsätzen ist es besonders günstig, wenn Achslagerkästen nicht nur nicht vom Radsatz abgebaut, sondern auch nicht geöffnet werden müssen. Deshalb wird vorgeschlagen, zu reprofilierende Radsätze drehbar in einer Radsatzdrehmaschiene mit Reibrollenantrieb an den ungeöffneten Achslagerkästen aufzunehmen und abzustützen. Bei Maschinen mit Reibrollenantrieb kann dann der Radsatz von einer Reibrolle an einem Rad angetrieben werden. Zur Verbesserung der Leistung ist es jedoch auch möglich, einen Radsatz an jedem Rad mit einer oder auch mehreren Reibrollen anzutreiben. Da die Achslagerkästen feste Verschmutzungen, Rost oder auch Verschleiß, wenn bspw. an Führungen aufgenommen werden muß, aufweisen, ist es nur in wenigen Fällen möglich, den Radsatz in der Maschine so aufzunehmen, daß die Mittenachse des Radsatzes mit der Maschinenmittenachse übereinstimmt. In den meisten Fällen wird der Radsatz mit einer Schiefstellung seiner Mittenachse, die auch Rotationsachse ist, zur Maschinenmittenachse aufgenommen. Werden die Räder eines in Schiefstellung aufgenommenen Radsatzes ohne besondere Vorkehrungen reprofiliert, sind Räder mit unterschiedlichen Durchmessern unvermeidlich. Um die Schieflage in der Maschine zu ermitteln, wird an den Radprofilflächen der Räder je eine Meßfläche angedreht und deren Durchmesser gemessen, wobei die Stellung der Drehwerkzeuge bzw. der Supporte von einer Referenz aus bekannt sein sollte. Vorzugsweise wird eine für beide Supporte gleiche Referenz verwendet. Günstig ist es, wenn die Schneiden der Drehwerkzeuge für das Andrehen der Meßfläche, von der Referenz aus betrachtet, die gleiche Stellung bzw. die gleichen Abstände aufweisen. Werden nun die Durchmesser der Meßflächen gemessen und als unterschiedlich erkannt, ist es möglich, über die Differenz der Durchmesser die Schieflage des Radsatzes sehr einfach zu definieren.

Bei unterschiedlichen Meßflächendurchmessern ist die halbe Durchmesserdifferenz dieser Durchmesser ein Maß für die Schiefstellung der Radsatzmittenachse, aus dem die tatsächliche Schiefstellung ermittelt werden kann. Diese halbe Durchmesserdifferenz ist bei der Zustellung der Drehwerkzeuge am Rad mit dem größeren Meßflächendurchmesser zu berücksichtigen. Werden gleiche Meßflächendurchmesser gemessen, liegt die Mittenachse des Radsatzes entweder konzentrisch zu einer Maschinenmittenachse oder parallel zu dieser.

Die Ermittlung der Verschleißtiefen kann beispielsweise mit einer automatischen Tasteinrichtung nach der DE-AS 15 52 335 erfolgen. Mit dieser Tasteinrichtung werden die Räder eines Radsatzes am rotierenden Radsatz abgetastet und die Verschleißtiefe automatisch festgestellt und jeder Support auf Grund der festgestellten stärksten Verschleißstelle automatisch so zugestellt, daß die Drehwerkzeuge auch noch die größte Verschleißtiefe erfassen. Nicht nur diese Tasteinrichtung sondern auch andere schon bekannte Tasteinrichtungen können eingesetzt werden, wie z.B. eine Tasteinrichtung nach dem europäischen Patent Nr. 0 252 164.

Mit der halben Durchmesserdifferenz der Meßflächendurchmesser und größten Verschleißtiefe eines jeden Rades ist nun die Stellung der Drehwerkzeuge für den Reprofilierungsschnitt je Support bestimmbar.
Diese Stellung der Werkzeuge ist miteinander zu vergleichen und für das Rad, welches bei dieser Stellung der Drehwerkzeuge mit dem größten Durchmesser gedreht würde, so zu korrigieren, daß dieser Raddurchmesser gleich dem anderen Raddurchmesser wird.

Um ein Einwalzen von Spänen durch die Reibrolle in fertig reprofilierte Bereiche von Neuprofilen zu vermeiden, erfolgt die Reprofilierung zur Herstellung der Neuprofile zuerst außerhalb der Kontaktfläche Reibrolle/Rad und danach erst im Bereich der Kontaktfläche. Beim Reprofilieren im Bereich der Kontaktfläche Reibrolle/Rad besteht zwischen der Reibrolle und der reprofilierten Fläche ein Abstand in Größe der Schnittiefe, der ausreicht, ein Einwalzen von Drehspänen zu vermeiden. Erst wenn das überflüssige Material restlos abgespant ist, kommt die Reibrolle an der reprofilierten Fläche zur Anlage. Dann aber entstehen keine Späne mehr, so daß auch keine Einwalzung zu befürchten ist.

In einer Ausgestaltung des Verfahrens wird vorgeschlagen, daß die Meßfläche im Bereich der Kontaktfläche Reibrolle/Rad erzeugt wird und eine zusätzliche Ausgestaltung sieht vor, daß die Herstellung der Meßfläche im Bereich der äußeren Stirnseite der Lauffläche begonnen wird. Wird der Radsatz beim Reprofilieren auf einer gedrehten Umfangsfläche von der Reibrolle angetrieben, nämlich auf der gedrehten Meßfläche, werden Schwingungen der Meßrolle eines Reibradmeßgerätes, die zu Meßfehlern und zu unerwünschten Markierungen auf der Lauffläche führen können, vermieden. Außerdem treibt die Reibrolle dann an einer sauberen Umfangsfläche an, die einen hohen Reibwert aufweist. Wird die Meßfläche auf der Lauffläche des Rades derart vorgesehen, daß sie an der äußeren Stirnseite der Lauffläche beginnt, wird in einem Bereich, in welchem große Spantiefen vorkommen, durch den Schnitt für die Meßfläche diese Spantiefe günstig verkleinert.

In einer anderen Ausgestaltung des Verfahrens wird vorgeschlagen, daß die Meßfläche an der Spurkranzkuppe vorgesehen wird. Da die Spurkranzkuppen von reprofilierungsbedürftigen Rädern an Radsätzen zu der Kontur eines zugeordneten neuen Radprofils große Materialansammlungen aufweisen, die beim Reprofilieren zu entfernen sind, kann es vorteilhaft sein, die Meßflächen auf den Spurkranzkuppen vorzusehen.

In einer weiteren Ausgestaltung des Verfahrens wird vorgeschlagen, daß das Reprofilieren im Bereich der Meßfläche an der äußeren Stirnseite der Lauffläche begonnen wird.
Wenn der Bereich der Radprofilfläche außerhalb der Meßfläche reprofiliert ist, ist es günstig, an der äußeren Stirnseite der Lauffläche mit der Reprofilierung des Bereiches der Meßfläche zu beginnen, weil das Drehwerkzeug im Eilgang an diese Stirnseite herangeführt werden kann und bei Beginn des Schnittes keine Markierungen auf der bereits reprofilierten Fläche erzeugt.

Es kann aber auch die Reprofilierung nach der Messung in einem Schnitt durchgeführt werden. Auch dann ist die äußere Stirnseite der Lauffläche ein günstiger Startpunkt, wenn zur Vermeidung einer Spaneinwalzung der Antrieb am Spurkranz erfolgt.

Wiederum und nach einer Ausgestaltung des Verfahrens wird vorgeschlagen, daß der zu reprofilierende Radsatz in ausgebautem Zustand für den Antrieb an seinen Achslagerkästen aufgenommen und fixiert und von mindestens einer Reibrolle rotierend angetrieben wird, wobei die Drehwerkzeuge nach Herstellung der Meßflächen zurückgezogen und sodann in eine Anfangsposition an der inneren Spurkranzflanke der Spurkranzfläche gefahren werden, deren Abstand von der Radachse in Abhängigkeit von der Verschleißtiefe und vom Ergebnis der Durchmessermessung der Meßfläche so gewählt ist, daß sie Neuprofile gleichen Durchmessers herstellen, worauf die Reprofilierung, beginnend in der Anfangsposition und fortschreitend in Richtung der äußeren Stirnseite der Lauffläche durchgeführt wird.
Liegen die Meßflächen auf den Laufflächen der Räder und beginnen an den äußeren Stirnseiten der Laufflächen, ist es günstig, die Reprofilierung an der inneren Spurkranzflanke zu beginnen. Es kann dann das gesamte Profil nach dem Meßschnitt ohne Schnittunterbrechung und ohne die Gefahr des Spaneinwalzens bearbeitet werden. Ist die notwendige Spantiefe hierfür zu groß, so kann der Schnitt auch problemlos unterbrochen oder doppelt durchgeführt werden.

Die Kontaktfläche Reibrolle/Rad wird erst dann reprofiliert, wenn andere Umfangsflächen des Rades schon reprofiliert sind, wenn ein Antrieb an der Lauffläche erfolgt.

Durch die notwendige Schnittiefe besteht beim Reprofilieren im Bereich der Kontaktfläche solch ein Abstand zwischen der Reibrolle und dem bereits reprofilierten Bereich der Umfangsfläche, daß keine Späne in die bereits reprofilierte Fläche eingewalzt werden können. Zum vollen Kontakt von Reibrolle und Rad kommt es erst dann, wenn die Reprofilierung beendet ist.

Vorrichtungsmäßig ist die Aufgabe, ausgehend von einer Überflurdrehmaschine zum Reprofilieren der Räder eines um seine Mittenachse rotierbar aufgenommenen und abgestützten Radsatzes, angetrieben von mindestens einer an die Umfangsfläche mindestens eines Rades des Radsatzes anlegbaren Reibrolle, wobei die Reibrolle auch unter Anlagekraft so beweglich bleibt, daß sie radialen Lageveränderungen der jeweils momentanen Kontaktfläche des rotierenden Radsatzes folgen kann, sowie mit mindestens einem Werkzeugträger zum Aufnehmen und Bewegen eines Bearbeitungswerkzeuges und einer Maschinensteuerung, dadurch gelöst, daß Mittel zur Aufnahme und Fixierung der Achslagerkästen eines Radsatzes sowie Mittel zur Bestimmung eines Durchmessers übereine Umfangsmessung vorgesehen sind, welchletztere mit einer Steuerung zur Einstellung der Drehwerkzeuge in Abhängigkeit vom Ergebnis der Umfangsmessung verbunden sind.

Durch diese Ausgestaltung der Maschine ist es möglich, Radsätze in ihren Achslagerkästen aufzunehmen und zu fixieren, wobei die Fixierung nicht nur in radialer sondern auch in axialer Richtung des Radsatzes wirksam sein soll. Die vorgesehenen Mittel zur Bestimmung von Durchmessern gestattet es, mindestens die Durchmesser der angedrehten Meßflächen eines jeden Rades zu ermitteln. Diese Mittel zur Bestimmung eines Durchmessers können auch so verschieblich sein, daß sie sowohl Durchmesser von Meßflächen auf der Spurkranzkuppe als auch Durchmesser von Meßflächen auf der Lauffläche ermitteln können. Als Mittel zur Bestimmung der Durchmesser ist es günstig, die bekannten und bewährten Reibradmeßeinrichtungen einzusetzen.

Die Messung der Verschleißtiefen kann auch außerhalb der Überflurdrehmaschine erfolgen. Es kann jedoch günstig sein, wie in einer Ausgestaltung vorgeschlagen, daß zusätzlich an der Maschine Einrichtungen zur Ermittlung der Verschleißtiefe an jedem Rad des Radsatzes vorgesehen sind.

Mit einer derart ausgestalteten Überflurdrehmaschine ist es möglich, die Verschleißtiefe der Räder eines Radsatzes zu ermitteln und es ist ebenfalls möglich, die Durchmesser von angedrehten Meßflächen über eine Umfangsmessung zu ermitteln. Diese Meßdaten werden einer Maschinensteuerung zugeleitet, die dann diese Daten auswertet und die notwendigen Stellwege für die Drehwerkzeuge der Supporte errechnet und die Zustellung bewirkt.

In zwei weiteren Ausgestaltungen der Maschine wird vorgeschlagen, daß mindestens eine den Antrieb bewirkende Reibrolle an der Lauffläche bzw. am Spurkranz anlegbar ist oder daß die Reibrolle realtiv zum Radsatz axial lageveränderlich gehalten ist, zur wahlweisen Anlage an Lauffläche oder Spurkranz. Das Anlegen der Reibrolle an Lauffläche oder Spurkranz kann dann günstig sein, wenn durch das Andrehen der Meßflächen entweder an der Lauffläche oder an der Spurkranzkuppe besonders viel überflüssiger Werkstoff beseitigt wird, so daß das Andrehen der Meßflächen wie ein Vorschnitt wirkt und die Spantiefe für die Reprofilierung günstig beeinflußt. Mit einer lageveränderlich gehaltenen Reibrolle wird die Flexibilität der Maschine erhöht.

Weitere vorteilhafte Ausgestaltungen der Drehmaschine, die die Ausbildung der Fixierung für die Achslagerkästen betreffen, werden in zusätzlichen Unteransprüchen vorgeschlagen.

Die Erfindung soll nun anhand der beigefügten Zeichnungen näher erläutert werden.

Es zeigen:
- Figur 1: ein Rad eines Radsatzes mit einer an die Radprofilfläche im Laufflächenbereich angelegten Reibrolle,
- Figur 2: Darstellung wie in Figur 1, jedoch mit angedrehter Meßfläche,
- Figur 3: einen Radsatz in vereinfachter Darstellung mit an die Laufflächen angelegten Reibrollen und Drehwerkzeugen,
- Figur 4: ein Rad eines Radsatzes mit an eine Meßfläche im Laufflächenbereich angelegter Reibrolle und Drehwerkzeug,
- Figur 5: ein Rad eines Radsatzes mit an eine Meßfläche im Laufflächenbereich angelegter Reibrolle und außerhalb der Kontaktfläche Reibrolle/Rad fertig reprofiliertem Radprofil,
- Figur 6: eine erfindungsgemäße Überflurdrehmaschine in der Vorderansicht
- Figur 7: eine Seitenansicht (schematisiert) der Maschine nach Figur 6,
- Figur 8: ein Rad eines Radsatzes mit einer Meßfläche am Spurkranz und einer dort angelegten Reibrolle,
- Figur 9: Darstellung wie in Figur 4 jedoch bei Arbeitsbeginn an der inneren Spurkranzflanke,

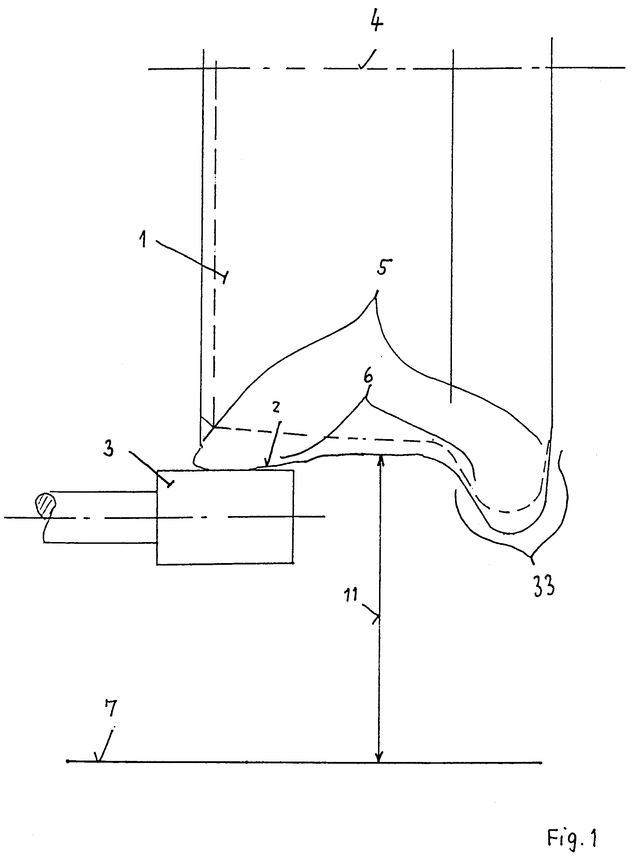

Figur 1 zeigt ein Rad 1 mit an die Lauffläche 2 angelegter Reibrolle 3 und der Mittenachse 4, die zugleich Rotationsachse ist. Die verschlissene Radprofilfläche 5, die aus Lauffläche 2 und Spurkranzfläche 33 besteht, zeigt auf der Lauffläche 2 die größte Verschleißtiefe 6. Diese größte Verschleißtiefe 6 kann z.B. mit einem Taster hinsichtlich ihrer Größe festgestellt und registriert werden. Zweckmäßig ist es, die Verschleißtiefe 6 als Abstand 11 von einer Referenz 7 aus zu ermitteln. Die für die Ermittlung der Lage der größten Verschleißtiefe 6 geeigneten Taster sind bekannt. Die Referenz 7 kann die Ausgangsstellung der Drehwerkzeuge bzw. der Werkzeugträger sein.

Ein bekannter Verschleißtaster kann in geeigneter Position an einem Maschinenständer angebracht sein und so verfahrbar sein, daß die Radprofilfläche 5 erreichbar ist. Der Verschleißtaster kann jedoch auch an einem Werkzeugträger angebracht sein und mit diesem verfahren werden.

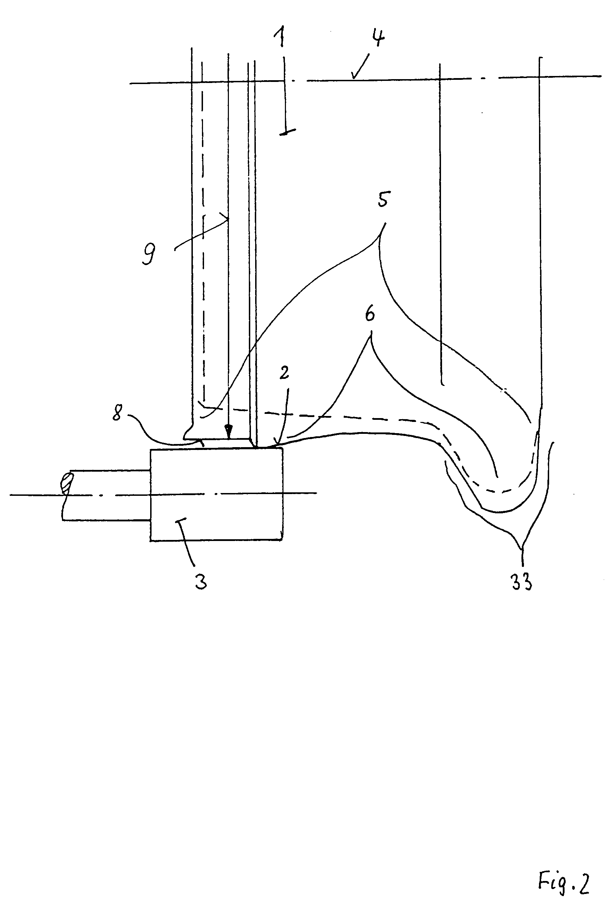

Bevor mit der Reprofilierung begonnen wird, ist die größte Verschleißtiefe 6 bzw. der Abstand 11 zu ermitteln und zu registrieren. Wenn dieser Meßvorgang erledigt ist, wird eine Meßfläche 8 angedreht, wie in Figur 2 dargestellt, und deren Durchmesser 9 über eine Umfangsmessung ermittelt.

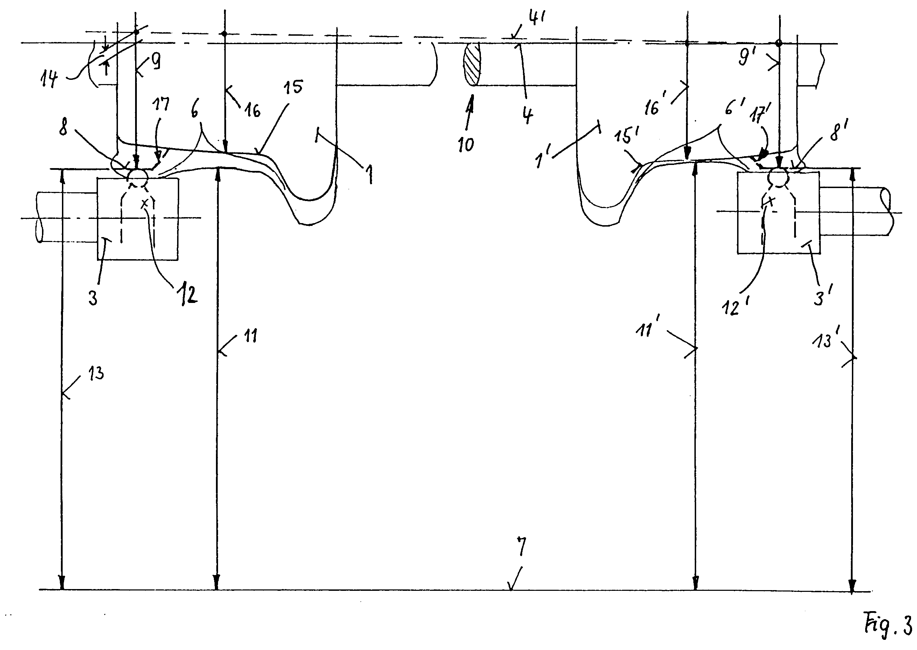

In Figur 3 ist ein Radsatz 10 in vereinfachter Darstellung mit an die Räder 1,1' angelegten Reibrollen 3,3' abgebildet. Der Radsatz wird von den Reibrollen 3,3' angetrieben und rotiert um die Mittenachse 4,4'. Die größte Verschleißtiefe 6,6' je Rad 1,1' wurde am rotierenden Radsatz ermittelt und durch die Abstände 11,11' von der Referenz 7 definiert. Die Drehwerkzeuge 12,12' sind mit einem geringeren Abstand 13,13' von der Referenz 7 aus betrachtet, als die Abstände 11,11' zugestellt und drehen die Meßfläche 8,8'. Für diese Zustellung der Drehwerkzeuge 12,12' kann es zweckmäßig sein, gleiche Abstände 13,13' von der Referenz 7 vorzusehen, weil dann die Auswertung der notwendigen Daten zur Ermittlung der endgültigen Zustellung der Drehwerkzeuge einfacher ist. Sobald die angedrehten Meßflächen 8,8' eine ausreichende Breite zum Anlegen eines Reibradmeßgerätes 23,23' aufweisen, werden diese an die Meßflächen 8,8' angelegt und die Durchmesser 9,9' über eine Umfangsmessung bestimmt. In der Figur 3 ist durch die gestrichelte Mittenachse 4' eine Schiefstellung des Radsatzes 10 dargestellt. Der Radsatz 10 rotiert für diese Darstellung beim Antreiben durch die Reibrollen 3,3' um die Mittenachse 4'.

Bei der Bestimmung der Durchmesser 9,9' der Meßflächen 8,8' wird somit an Rad 1 ein größerer Meßflächendurchmesser 9 festgestellt als an Rad 1'.

Die halbe Durchmesserdifferenz der Durchmesser 9,9' ist ein Maß für die schiefe Einspannlage des Radsatzes 10. Die halbe Durchmesserdifferenz ist in der Figur 3 mit Bezugszeichen 14 angegeben. Die Lage der Drehwerkzeuge 12,12' für das Drehen der Meßflächen 8,8' und die größte Verschleißtiefe 6,6' relativ zur Referenz 7 sind bekannt. An Rad 1' des Radsatzes 10 wird nun die Stellung des Drehwerkzeuges 12' so verändert, daß die größte Verschleißtiefe 6' erfaßt wird, wenn das Neuprofil 15' hergestellt wird. An Rad 1 wird das Drehwerkzeug 12 so zugestellt, daß die größte Verschleißtiefe 6 erfaßt wird, zuzüglich der halben Durchmesserdifferenz 14, so daß das Neuprofil 15 hergestellt wird. Diese Zustellungen der Drehwerkzeuge 12,12' werden sodann untereinander verglichen. Falls sich bei diesen Zustellungen der Drehwerkzeuge unterschiedliche Durchmesser ergeben, wird für das Rad mit dem größeren Durchmesser das Werkzeug so korrigiert, daß Neuprofile mit gleichen Durchmessern erzeugt werden.

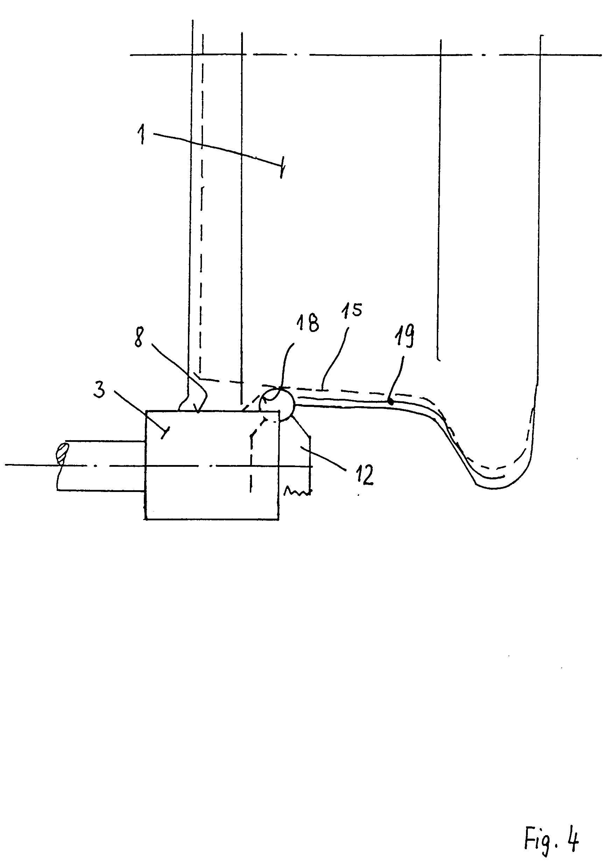

In Figur 4 ist das Rad 1 dargestellt mit an die Meßfläche 8 angelegter Reibrolle 3. Das Drehwerkzeug 12 liegt mit seiner Schneide 18 an der Kontur des Neuprofils 15 an und zerspant den Materialüberstand 19. Bei dieser Zerspanung können in eine fertig reprofilierte Fläche eines Neuprofils keine Späne eingewalzt werden, weil die Reibrolle 3 an der Meßfläche 8 anliegt. In die Meßfläche 8 eingewalzte Späne hinterlassen zwar Markierungen. Diese Markierungen werden jedoch bei der Reprofilierung im Bereich der Meßfläche abgedreht.

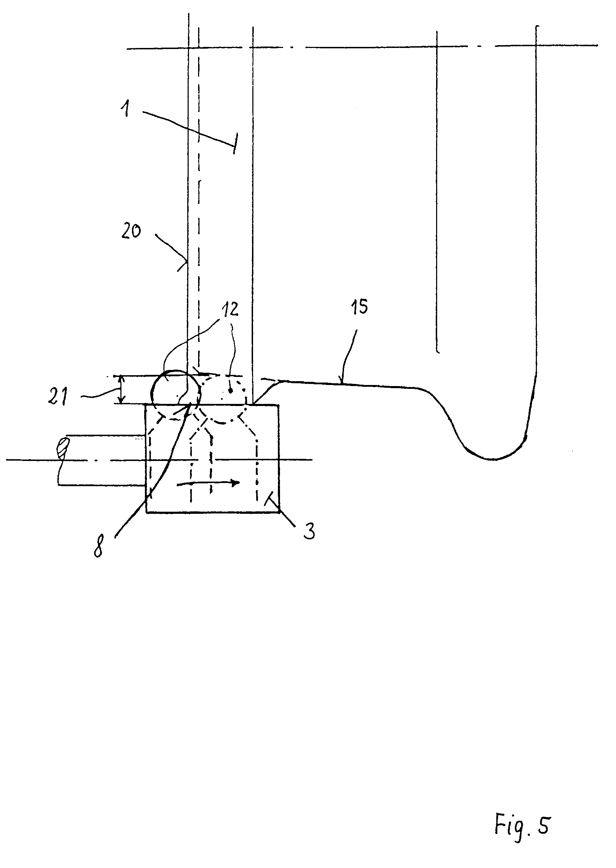

In Figur 5 ist nun das Rad 1 dargestellt mit an die Meßfläche 8 angelegter Reibrolle 3. Das außerhalb der Kontaktfläche Reibrolle/Rad liegende Neuprofil 15 ist bereits reprofiliert. Das Drehwerkzeug 12 befindet sich jetzt im Bereich der äußeren Stirnseite 20 und reprofiliert das Neuprofil 15 im Bereich der Kontaktfläche Reibrolle/Rad. Aus Figur 5 ist leicht zu entnehmen, daß der Abstand 21 zwischen Reibrolle 3 und Neuprofil 15 so groß ist, daß keine Späne in die im Bereich der Kontaktfläche Reibrolle/Rad reprofilierte Fläche eingewalzt werden können.

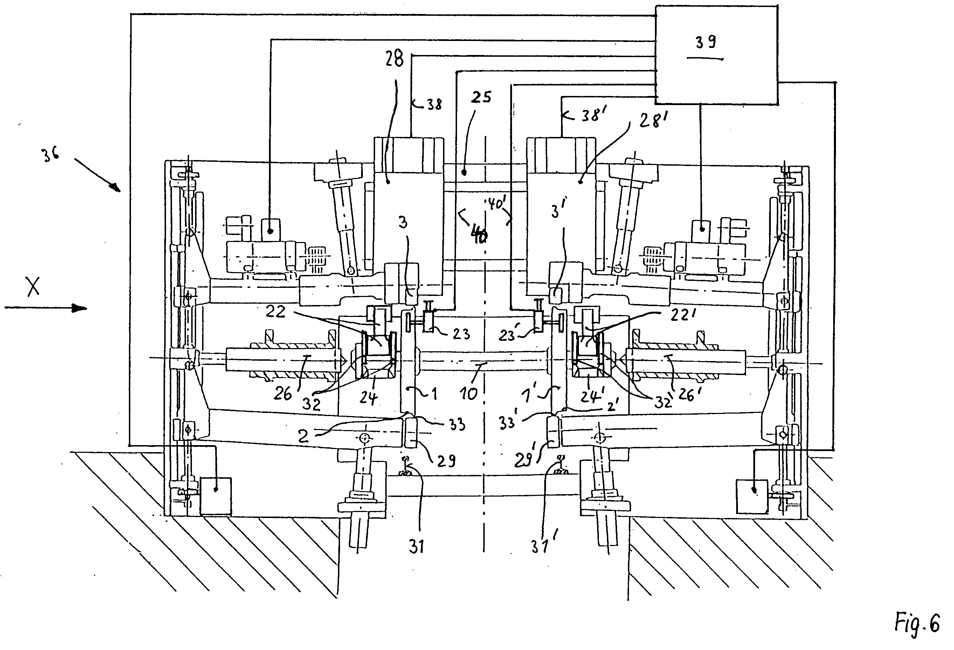

Figur 6 zeigt eine Überflurdrehmaschine zum Reprofilieren der Räder von Radsätzen mit Reibrollenantrieb. Eine Maschine dieser Gattung ist in ihrer Funktion beschrieben in der DE-OS 39 31 747, hierauf muß daher nicht näher eingegangen werden.

Die in Figur 6 dargestellte Überflurdrehmaschine ist mit Mitteln 22,22' zur Aufnahme und Fixierung der Achslagerkästen 24,24' eines Radsatzes 10 sowie Mitteln 23,23' zur Bestimmung eines Durchmessers über eine Umfangsmessung am Rad 1,1' ausgestattet. Die Mittel 22,22' zur Aufnahme und Fixierung der Achslagerkästen 24,24' sind am Maschinenständer 25 befestigt. Ebenso die Mittel 23,23' zur Bestimmung eines Durchmessers. Bei diesen Mitteln 23,23' kann es sich um bekannte Reibradmeßgeräte handeln. Weiterhin zeigt die Überflurdrehmaschine der Figur 6 aus Flexibilitätsgründen je Seite eine verschiebbare Pinole 26,26' je mit Körnerspitze. Bei einer Maschine, die Radsätze nur an den Achslagerkästen 24,24' aufnehmen soll, können diese Pinolen entfallen. Vielfach weisen die Achslagerkästen jedoch z.B. an ihren stirnseitigen Deckeln Körnerbohrungen auf. In einem solchen Fall sind die Pinolen mit ihren Körnerspritzen als Mittel für die Aufnahme und Fixierung der Achslagerkästen hilfreich.

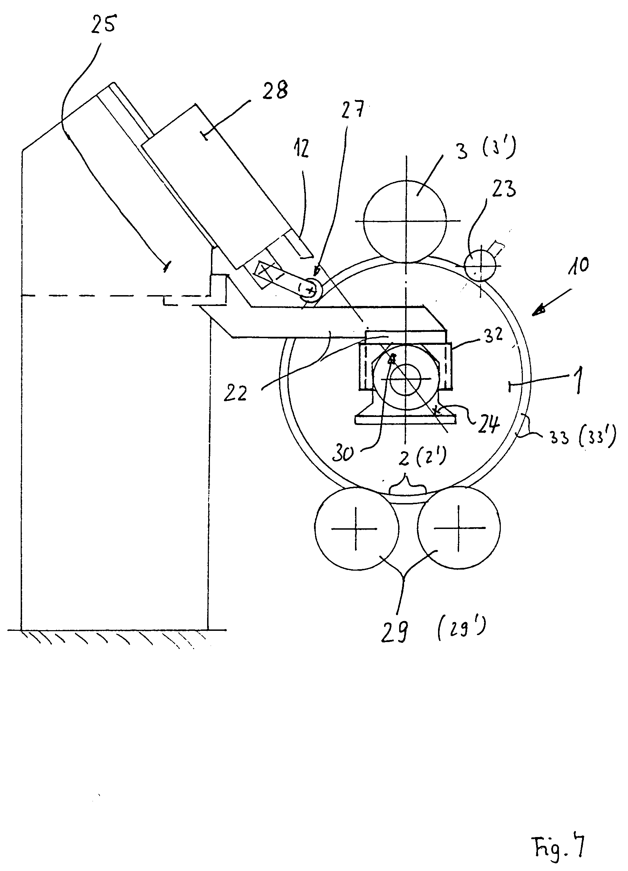

Figur 7 zeigt in schematisierter Darstellung die linke Seite der Drehmaschine aus Richtung X nach Figur 6. Die Mittel 22 zur Aufnahme und Fixierung des Achslagerkastens 24 sind am Maschinenständer 25 angebracht. Zusätzlich ist ein Verschleißtaster 27 am Werkzeugträger 28 befestigt dargestellt.

Der Radsatz 10 ist an den Achslagerkästen 24,24' von den Mitteln 22,22' zur Aufnahme und Fixierung der Achslagerkästen aufgenommen und fixiert dargestellt. Der Radsatz 10 wird dafür von den Reibrollenpaaren 29,29' von den Einrollschienen 31,31' (Fig. 6) abgehoben und in die dem Radsatz 10 entgegengerichteten Öffnungen 30,30' (Fig. 7) der Mittel 22,22' eingehoben und angepreßt.
Die Mittel 22,22' zum Aufnehmen und Fixieren der Achslagerkästen 24,24' eines Radsatzes 10 umfassen die Achslagerkästen angenähert an drei Seiten und bewirken somit einen radial festen Sitz. Für eine axiale Fixierung können die Mittel 22,22' in an den Achslagerkästen 24,24' vorhandene Führungen 32,32' formschlüssig eingreifen.
Durch z.B. axiale Verschiebung bis auf einen Anschlag kann axiales Spiel formschlüssig verhindert werden. Es kann aber auch eine kraftschlüssige Einspannung und damit Fixierung oder auch eine Kombination beider Möglichkeiten -je nach zu fixierender Richtung- durchgeführt werden.

In der Darstellung nach Figur 6 wird der Radsatz 10 an den Spurkranzflächen 33,33' der Räder 1,1' von den Reibrollenpaaren 29,29' erfaßt. Eine Maschine nach Figur 6 kann jedoch auch so ausgeführt sein, daß die Reibrollenpaare 29,29' und die Reibrollen 3,3' an den Laufflächen 2,2' der Räder 1,1' eines Radsatzes 10, wie in Figur 7 dargestellt, angreifen, denn es soll mindestens die den Antrieb bewirkende Reibrolle -das könnte die Reibrolle 3,3' sein-an der Lauffläche 2,2' bzw. an der Spurkranzfläche 33,33' anlegbar sein.

Für eine flexible Ausgestaltung der Drehmaschinewird sogar vorgeschlagen, die Reibrollen relativ zum Radsatz axial lageveränderlich zu halten, damit wahlweise eine Anlage an der zugeordneten Lauffläche 2,2' oder Spurkranzfläche 33,33' möglich ist.
Damit ist es dann möglich, die Meßflächen an der Lauffläche oder an der Spurkranzkuppe bzw. Spurkranzfläche vorzusehen und dort auch anzutreiben. Die Ausgestaltung solcherart lageveränderlich gehaltener Reibrollen ist dem durchschnittlichen Fachmann geläufig und braucht hier nicht weiter dargestellt zu werden.

Die Reibrollen 3,3' können, wie dargestellt, den Reibrollenpaaren 29,29' diametral gegenüberliegend angeordnet sein und die Reibrollenpaare 29,29' müssen den Radsatz 10 mit einer solchen Kraft in die Mittel 22,22' einpressen, daß die Reibrollen 3,3' mit der für das Antreiben notwendigen Normalkraft angelegt werden können und die Reprofilierung erfolgen kann, ohne die Fixierung in den Mitteln 22,22' zu lösen.

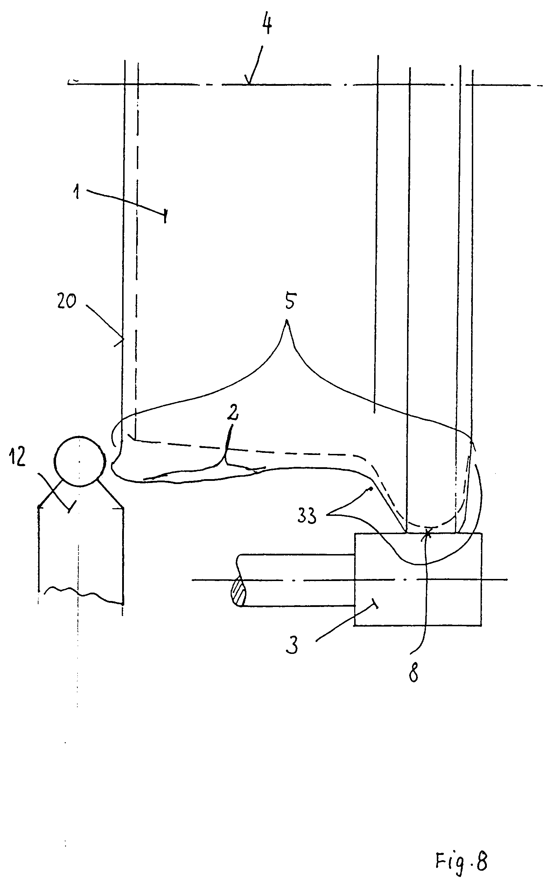

Figur 8 zeigt ein Rad 1 mit einer an eine Meßfläche 8 im Bereich der Spurkranzflanke 33 angelegten Reibrolle 3, die das Rad 1 antreiben soll. Das Drehwerkzeug 12 beginnt hier mit der Reprofilierung an der äußeren Stirnseite 20 und verfährt in Richtung der Spurkranzfläche 33.

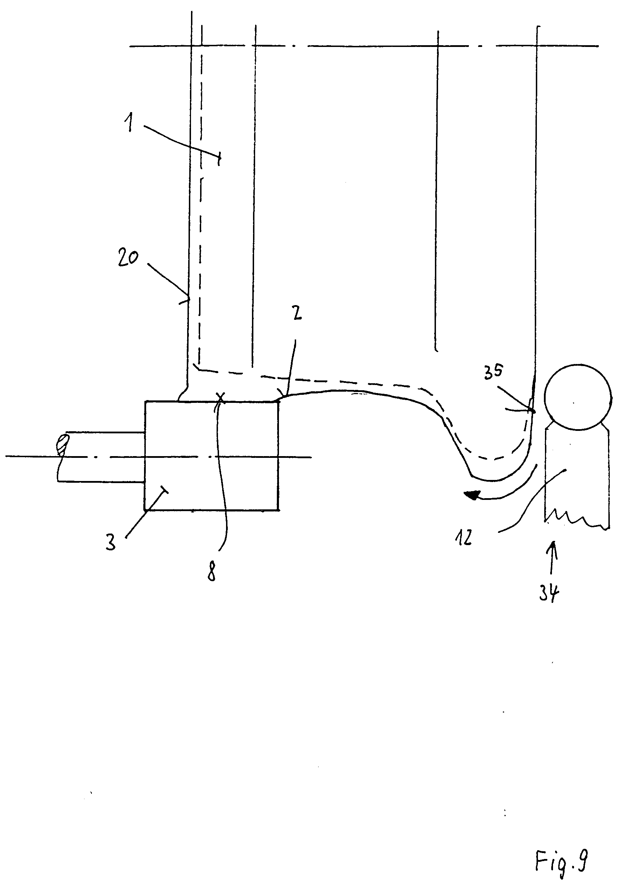

Figur 9 zeigt ein Rad 1 mit einer an die Meßfläche 8 im Bereich der Lauffläche 2 angelegten Reibrolle 3, die das Rad antreiben soll. Das Drehwerkzeug 12 beginnt hier mit der Reprofilierung in einer Anfangsposition 34 an der inneren Spurkranzflanke 35 der Spurkranzfläche 33 und verfährt in Richtung der äußeren Radstirnfläche 20. Diese Art der Reprofilierung ist sehr günstig, weil der Reprofilierungsschnitt in einem Zuge, ausgehend von der Spurkranzflanke 35, bis zur äußeren Stirnseite 20 erfolgen kann.

Abschließend soll ein Reprofilierungsvorgang beschrieben werden. Ein Radsatz 10, der auf den Einrollschienen 31,31' in die Drehmaschine 36 eingerollt wurde, wird von den bis unterhalb der Einrollschienen 31,31' abgesenkten Reibrollenpaaren 29,29' aufgenommen und bis auf Maschinenmitte 37 angehoben.
Zugleich mit dem Anhebevorgang werden die Achslagerkästen 24,24' in die Öffnungen 30,30' der Mittel 22,22' zur Aufnahme und Fixierung der Achslagerkästen eingeschoben und an die Mittel 22,22' angepreßt.

Dazu etwa gleichzeitig werden die Reibrollen 3,3' an die Umfangsfläche der Räder 1,1' angelegt. Die Anpreßkraft der Rollenpaare 29,29' muß so groß sein, daß beim Reprofilieren kein Spiel zwischen den Achslagerkästen 24,24' und den Mitteln 22,22' bzw. kein Lösen auftritt. Wenn der Radsatz 10 derart aufgenommen ist, wird, wie vorangehend schon beschrieben, mit einem Taster 27 (Fig. 7) die größte Verschleißtiefe je Rad 1,1' gemessen und über eine Leitung 38,38' dem Rechner 39 zugeleitet. Mit einer Zustellung der Drehwerkzeuge 12,12' geringer als die größte Verschleißtiefe eines jeden Rades 1,1' werden dann an den Rädern 1,1' die Meßflächen 8,8' angedreht. Sobald eine ausreichende Breite je Meßflächen 8,8' vorliegt, um die Reibradmeßgeräte 23,23' je mit einer Meßrolle an die Meßflächen anzulegen, erfolgt die Ermittlung der Meßflächendurchmesser 9,9'. Die Meßwerte dieser Messungen werden dem Rechner 39 über eine Leitung 40,40' zugeleitet. Vom Rechner 39 werden die Durchmesser 9,9' der Meßfläche 8,8' berechnet und miteinander verglichen. Eine vorhandene halbe Durchmesserdifferenz 14 ist dann ein Hinweis auf eine zu der Maschinenmitte 37 schiefliegende Mittenachse 4' des Radsatzes 10.
Die Zustellwege für die Zustellung der Werkzeugträger 28,28', ausgehend von einer Referenz 7, werden dann berechnet unter Berücksichtigung der größten Verschleißtiefe und die halbe Durchmesserdifferenz 14 an dem Rad mit dem größten Meßflächendurchmesser 9,9' berücksichtigt. Diese Daten für die Zustellwege werden dann untereinander verglichen und darauf geprüft, ob Neuprofile 15,15' gleichen Durchmessers 16,16' bei einer Zustellung der Werkzeuge 12,12' bzw. Werkzeugträger 28,28' mit den errechneten Zustellwegen hergestellt werden.

Ergibt dieser Vergleich, daß die Räder 1,1' mit gleichen Durchmessern 16,16' hergestellt werden, werden die Werkzeuge 12,12' auf den Bahnen 17,17' verfahren bis zu den Konturen der Neuprofile 15,15'. Falls der Vergleich der berechneten Zustellwege unterschiedliche Durchmesser 16,16' der Räder 1,1' ergibt, wird der Zustellweg für das Rad mit dem größeren Durchmesser so korrigiert, daß beide Räder 1,1' mit gleichen Durchmessern 16,16' hergestellt werden. Die Reprofilierung erfolgt dann außerhalb der Kontaktfäche Reibrolle/Rad und nachfolgend im Restbereich des Profils.

### Liste der verwendeten Bezugszeichen

- 1,1': Rad
- 2,2': Lauffläche
- 3,3': Reibrolle
- 4,4': Mittenachse
- 5: Radprofilfläche
- 6,6': Verschleißtiefe
- 7: Referenz
- 8,8': Meßfläche
- 9,9': Durchmesser
- 10: Radsatz
- 11,11': Abstand
- 12,12': Drehwerkzeug
- 13,13': Abstand
- 14: halbe Durchmesserdifferenz
- 15,15': Neuprofil
- 16,16': Durchmesser
- 17,17': Bahnen
- 18: Schneide
- 19: Materialüberstand
- 20: Stirnseite
- 21: Abstand
- 22,22': Mittel
- 23,23': Mittel
- 24,24': Achslagerkasten
- 25: Maschinenständer
- 26,26': Pinole
- 27: Verschleißtaster
- 28,28': Werkzeugträger
- 29,29': Reibrollenpaar
- 30,30': Öffnung
- 31,31': Einrollschienen
- 32,32': Führung
- 33,33': Spurkranzfläche
- 34: Anfangsposition
- 35: Spurkranzfläche
- 36: Drehmaschine
- 37: Maschinenmitte
- 38,38': Leitung
- 39: Rechner
- 40,40': Leitung
- X: Richtung

## Patentansprüche

1. Verfahren zur Reprofilierung der jeweils aus Lauf- und Spurkranzfläche (2,2';33,33') zusammengesetzten Radprofilflächen (5) von um eine Mittenachse rotierend angetriebenen Eisenbahnradsätzen (10) durch Abdrehen, wobei eine Meßfläche (8,8') an den Radprofilflächen (5) durch Drehen hergestellt wird, worauf nach Messung der Durchmesser (9,9') der Meßflächen (8,8') die Drehwerkzeuge (12,12') in Abhängigkeit von diesem Meßergebnis und den senkrecht zur Mittenachse (4,4') vorhandenen Verschleißtiefen (6,6') in Richtung zur Mittenachse (4,4') so verstellt werden, daß sie nach Beendigung der Reprofilierung am reprofilierten Radsatz (10) Neuprofile (15,15') gleichen Durchmessers erzeugt haben, dadurch gekennzeichnet, daß der zu reprofilierende Radsatz (10) in ausgebautem Zustand für den Antrieb an seinen Achslagerkästen (24,24') aufgenommen und fixiert und von mindestens einer Reibrolle (3,3') rotierend angetrieben wird, wobei die Reprofilierung der Neuprofile (15,15') zunächst außerhalb der Kontaktflächen Reibrolle/Rad und nachfolgend im Restbereich des Profils erfolgt.

2. Verfahren nach Anspruch 1, dadurch gekennzeichnet, daß die Meßfläche (8,8') im Bereich der Kontaktflächen Reibrolle/Rad erzeugt wird.

3. Verfahren nach Anspruch 1, dadurch gekennzeichnet, daß die Herstellung der Meßfläche (8,8') im Bereich der äußeren Stirnseite (20) der Lauffläche (2,2') begonnen wird.

4. Verfahren nach Anspruch 1, dadurch gekennzeichnet, daß die Meßfläche (8,8') an der Spurkranzkuppe vorgesehen wird.

5. Verfahren nach Anspruch 3, dadurch gekennzeichnet, daß das Reprofilieren im Bereich der Meßfläche (8,8') an der äußeren Stirnseite (20) der Lauffläche (2,2') begonnen wird.

6. Verfahren nach mindestens einem der Ansprüche 1 bis 4, dadurch gekennzeichnet, daß das Reprofilieren im Bereich der Meßfläche (8,8') in Richtung der äußeren Radstirnseite (20) erfolgt.

7. Verfahren nach dem Gattungsbegriff des Anspruchs 1, dadurch gekennzeichnet, daß der zu reprofilierende Radsatz (10) in ausgebautem Zustand für den Antrieb an seinen Achslagerkästen (24,24') aufgenommen und fixiert und von mindestens einer Reibrolle rotierend angetrieben wird, wobei die Drehwerkzeuge (12,12') nach Herstellung der Meßfläche (8,8') zurückgezogen und sodann in eine Anfangsposition (34) an der inneren Spurkranzflanke (35) der Spurkranzfläche (33,33') gefahren werden, deren radiale Lage in Abhängigkeit von der Verschleißtiefe (6,6') und vom Ergebnis der Durchmessermessung der Meßfläche (8,8') so gewählt ist, daß sie Neuprofile (15,15') gleichen Durchmessers (16,16') herstellen, worauf die Reprofilierung, beginnend in der Anfangsposition (34) und fortschreitend in Richtung der äußeren Stirnseite (20) der Lauffläche (2,2') durchgeführt wird.

8. Verfahren nach Anspruch 7, dadurch gekennzeichnet, daß die Reprofilierung in einem Schnitt durchgeführt wird.

9. Überflurdrehmaschine zum Reprofilieren der Räder (1,1') eines um seine Mittenachse (4,4') rotierbar aufgenommenen und abgestützten Radsatzes (10), angetrieben von mindestens einer an die Umfangsfläche mindestens eines Rades des Radsatzes anlegbaren Reibrolle (3,3'), wobei die Reibrolle (3,3') auch unter Anlagekraft so beweglich bleibt, daß sie radialen Lageveränderungen der jeweils momentanen Kontaktfläche des rotierenden Radsatzes (10) folgen kann, sowie mit mindestens einem Werkzeugträger zum Aufnehmen und Bewegen eines Bearbeitungswerkzeuges (12,12') und einer Maschinensteuerung (39), zur Durchführung des Verfahrens nach einem der Ansprüche 1 bis 8, dadurch gekennzeichnet, daß Mittel (22,22') zur Aufnahme und Fixierung der Achslagerkästen (24,24') eines Radsatzes (10) sowie Mitteln (23,23') zur Bestimmung eines Durchmessers über eine Umfangsmessung vorgesehen sind, welchletztere mit einer Steuerung (39) zur Einstellung der Drehwerkzeuge in Abhängigkeit vom Ergebnis der Umfangsmessung verbunden sind.

10. Maschine nach Anspruch 9, dadurch gekennzeichnet, daß zusätzlich Einrichtungen (27) zur Ermittlung der Verschleißtiefe (6,6') an jedem Rad (1,1') des Radsatzes (10) vorgesehen sind.

11. Maschine nach einem der Ansprüche 9 oder 10, dadurch gekennzeichnet, daß mindestens eine den Antrieb bewirkende Reibrolle (3,3') an der Lauffläche (2) bzw. am Spurkranz (33) anlegbar ist.

12. Maschine nach Anspruch 11, dadurch gekennzeichnet, daß die Reibrolle (3,3') relativ zum Radsatz (10) axial lageveränderlich gehalten ist zur wahlweisen Anlage an Lauffläche (2) oder Spurkranz (33).

13. Maschine nach Anspruch 9, dadurch gekennzeichnet, daß die Mittel (22,22') zur Aufnahme und Fixierung der Achslagerkästen (24,24') ausgebildet sind als Anlagekonsolen für die Achslagerkästen (24,24'), die diese in mindestens einer vertikalen Richtung formschlüssig abstützen.

14. Maschine nach Anspruch 13, dadurch gekennzeichnet, daß eine weitere formschlüssige Fixierung für die senkrecht zur Drehachse stehenden Horizontalrichtungen vorgesehen ist.

15. Maschine nach Anspruch 13 und 14, dadurch gekennzeichnet, daß die Mittel (22,22') zur Aufnahme und die Fixierung der Achslagerkästen (24,24') als nach unten oder nach oben offene Klauen, die je einen Achslagerkasten (24,24') an drei Seiten umfassen, ausgebildet sind, die über Haltemittel am Fundament oder einem Maschinenständer (25) angeordnet sind.

## Claims

1. Method of reprofiling the wheel profile faces (5), composed in each case of tread and flange face (2,2'; 33, 33'), of railway wheel sets (10) driven so as to rotate round a centre line by machining, wherein a measuring face (8, 8') is produced on the wheel profile faces (5) by turning, whereupon the turning tools (12, 12') are adjusted towards the centre line (4, 4') after measurement of the diameters (9, 9') of the measuring faces (8, 8') as a function of this measured result and the depth of wear (6, 6') perpendicularly to the centre line (4, 4') in such a way that they have produced new profiles (15, 15') of equal diameter on the reprofiled wheel set (10) on completion of reprofiling, characterized in that the wheel set (10) to be reprofiled is held at its axle boxes (24, 24') in the dismantled state for the drive and is fixed and is set into rotation by at least one friction roller (3, 3'), the reprofiling of the new profiles (15, 15') initially taking place outside the contact faces between friction roller and wheel and then in the remainder of the profile.

2. Method according to Claim 1, characterized in that the measuring face (8, 8') is produced in the region of the contact faces between friction roller and wheel.

3. Method according to Claim 1, characterized in that production of the measuring face (8, 8') is begun in the region of the outer end face (20) of the tread (2, 2').

4. Method according to Claim 1, characterized in that the measuring face (8, 8') is provided on the flange camber.

5. Method according to Claim 3, characterized in that reprofiling is begun in the region of the measuring face (8, 8') at the external end face (20) of the tread (2, 2').

6. Method according to at least one of Claims 1 to 4, characterized in that reprofiling takes place in the region of the measuring face (8, 8') in the direction of the outer end face (20) of the wheel.

7. Method according to the preamble of Claim 1, characterized in that the wheel set (10) to be reprofiled is held at its axle boxes (24, 24') in the dismantled state for the drive and is fixed and is set into rotation by at least one friction roller, wherein the turning tools (12, 12') are retracted after production of the measuring face (8, 8') and are then driven into a starting position (34) on the inner flange edge (35) of the flange face (33, 33'), of which the radial position is selected as a function of the depth of wear (6, 6') and of the result of measurement of the diameter of the measuring face (8, 8') in such a way that they produce new profiles (15, 15') of equal diameter (16, 16'), whereupon reprofiling is carried out, beginning in the starting position (34) and continuing in the direction of the outer end face (20) of the tread (2, 2').

8. Method according to Claim 7, characterized in that reprofiling is carried out in a cutting means.

9. Above-ground turning machine for reprofiling the wheels (1, 1') of a wheel set (10) which is held rotatably round its centre line (4, 4') and is supported, driven by at least one friction roller (3, 3') which can be applied to the peripheral face of at least one wheel of the wheel set, wherein the friction roller (3, 3') remains movable even under contact force in such a way that it can follow radial displacements of the respective instantaneous contact face of the rotating wheel set (10), and with at least one tool carrier for receiving and moving a machine tool (12, 12') and a machine controller (39) for carrying out the method according to one of Claims 1 to 8, characterized in that means (22, 22') for holding and fixing the axle boxes (24, 24') of a wheel set (10) and means (23, 23') for determining a diameter by measurement of the periphery are provided, the latter being connected to a controller (39) for adjusting the turning tools as a function of the result of periphery measurement.

10. Machine according to Claim 9, characterized in that additional devices (27) are provided for determining the depth of wear (6, 6') on each wheel (1, 1') of the wheel set (10).

11. Machine according to one of Claims 9 or 10, characterized in that at least one friction roller ( 3, 3') effecting the drive can be applied to the tread (2) or to the flange (33).

12. Machine according to Claim 11, characterized in that the friction roller (3, 3') is held axially displacably relative to the wheel set (10) for selective application to tread (2) or flange (33).

13. Machine according to Claim 9, characterized in that the means (22, 22') for holding and fixing the axle boxes (24, 24') are designed as contact brackets for the axle boxes (24, 24') which support them positively in at least one vertical direction.

14. Machine according to Claim 13, characterized in that a further positive fixing is provided for the horizontal directions which are perpendicular to the axis of rotation.

15. Machine according to Claims 13 and 14, characterized in that the means (22, 22') for holding and fixing the axle boxes (24, 24') are designed as downwardly or upwardly open claws which clasp a respective axle box (24, 24') on three sides and are arranged on the foundation or on a machine stand (25) via holding means.

## Revendications

1. Procédé pour le reprofilage par tournage des surfaces de bandage (5) formées d'une surface de roulement et d'une surface de boudin (2, 2' ; 33, 33') de jeux de roues de chemin de fer (10) entraînés en rotation sur un axe central, selon lequel on réalise par tournage une surface de mesure (8, 8') sur les surfaces de bandage (5) puis, après avoir mesuré les diamètres (9, 9') des surfaces de mesure (8, 8'), on déplace les outils de tournage (12, 12'), en fonction de ce résultat de mesure et des profondeurs d'usure (6, 6') perpendiculaires à l'axe central (4, 4'), vers cet axe central (4, 4') de telle sorte qu'après achèvement du reprofilage, lesdits outils ont réalisé de nouveaux profils (15, 15') de même diamètre sur le jeu de roues (10) reprofilé, caractérisé en ce que le jeu de roues à reprofiler (10) est logé et fixé à l'état démonté pour l'entraînement au niveau de ses boîtes d'essieux (24, 24') et est entraîné en rotation par au moins un galet de friction (3, 3'), le reprofilage des nouveaux profils (15, 15') se faisant tout d'abord à l'extérieur des zones de contact galet de friction/roue puis dans le reste de la zone du profil.

2. Procédé selon la revendication 1, caractérisé en ce que la surface de mesure (8, 8') est réalisée dans la zone des surfaces de contact galet de friction/roue.

3. Procédé selon la revendication 1, caractérisé en ce que la réalisation de la surface de mesure (8, 8') commence dans la zone du côté frontal extérieur (20) de la surface de roulement (2, 2').

4. Procédé selon la revendication 1, caractérisé en ce que la surface de mesure (8, 8') est prévue au niveau de l'arrondi du boudin.

5. Procédé selon la revendication 3, caractérisé en ce que le reprofilage commence dans la zone de la surface de mesure (8, 8') au niveau du côté frontal extérieur (20) de la surface de roulement (2, 2').

6. Procédé selon l'une au moins des revendications 1 à 4, caractérisé en ce que le reprofilage se fait dans la zone de la surface de mesure (8, 8') en direction du côté frontal extérieur (20) de la roue.

7. Procédé selon le préambule de la revendication 1, caractérisé en ce que le jeu de roues à reprofiler (10) est logé et fixé à l'état démonté pour l'entraînement au niveau de ses boîtes d'essieux (24, 24') et est entraîné en rotation par au moins un galet de friction, les outils de tournage (12, 12') étant retirés après la réalisation de la surface de mesure (8, 8') puis amenés dans une position initiale (34) au niveau du flanc intérieur (35) de la surface de boudin (33, 33') dont la position radiale est choisie en fonction de la profondeur d'usure (6, 6') et du résultat de la mesure de diamètre de la surface de mesure (8, 8') de manière à réaliser de nouveaux profils (15, 15') de même diamètre (16, 16'), après quoi le reprofilage est réalisé en commençant par la position initiale (34) puis en direction du côté frontal extérieur (20) de la surface de roulement (2, 2').

8. Procédé selon la revendication 7, caractérisé en ce que le reprofilage est réalisé en une passe.

9. Tour surélevé pour le reprofilage des roues (1, 1') d'un jeu de roues (10) logé et supporté en rotation sur son axe central (4, 4') et entraîné par au moins un galet de friction (3, 3') apte à être appliqué contre la surface périphérique d'au moins une roue du jeu de roues, étant précisé que le galet de friction (3, 3') reste mobile, même soumis à une force d'application, de manière à pouvoir suivre les variations de position radiales de la surface de contact du moment du jeu de roues (10) en rotation, le tour comprenant aussi au moins un porte-outil destiné à recevoir et à déplacer un outil d'usinage (12, 12'), et une commande de machine (39), pour la mise en oeuvre du procédé selon l'une des revendications 1 à 8, caractérisé en ce qu'il est prévu des moyens (22, 22') pour recevoir et fixer les boîtes d'essieux (24, 24') d'un jeu de roues (10), et des moyens (23, 23') pour déterminer un diamètre par l'intermédiaire d'une mesure circonférentielle, ces derniers moyens étant reliés à une commande (39) en vue du réglage des outils de tournage en fonction du résultat de la mesure circonférentielle.

10. Tour selon la revendication 9, caractérisé en ce qu'il est prévu en supplément des dispositifs (27) pour déterminer la profondeur d'usure (6, 6') sur chaque roue (1, 1') du jeu de roues (10).

11. Tour selon l'une des revendications 9 ou 10, caractérisé en ce que l'un au moins des galets de friction (3, 3') provoquant l'entraînement est apte à être appliqué contre la surface de roulement (2) ou le boudin (33).

12. Tour selon la revendication 11, caractérisé en ce que le galet de friction (3, 3') est maintenu mobile axialement par rapport au jeu de roues (10) en vue d'une application sélective contre la surface de roulement (2) ou le boudin (33).

13. Tour selon la revendication 9, caractérisé en ce que les moyens (22, 22') prévus pour recevoir et fixer les boîtes d'essieux (24, 24') sont conçus comme des consoles d'application pour lesdites boîtes d'essieux (24, 24'), qui supportent celles-ci par complémentarité de forme dans au moins un sens vertical.

14. Tour selon la revendication 13, caractérisé en ce qu'il est prévu une autre fixation par complémentarité de forme pour les sens horizontaux perpendiculaires à l'axe de rotation.

15. Tour selon les revendications 13 et 14, caractérisé en ce que les moyens (22, 22') prévus pour recevoir et fixer les boîtes d'essieux (24, 24') sont conçus comme des griffes ouvertes vers le bas ou vers le haut qui enserrent chacune une boîte d'essieu (24, 24') sur trois côtés et qui sont disposées grâce à des moyens de fixation sur le socle ou sur un montant (25) du tour.
